(19) Europäisches Patentamt
European Patent Office
Office européen des brevets

(11) EP 1 291 385 B1

(12) **EUROPEAN PATENT SPECIFICATION**

(45) Date of publication and mention of the grant of the patent:
**18.05.2005 Bulletin 2005/20**

(21) Application number: **01934462.1**

(22) Date of filing: **31.05.2001**

(51) Int Cl.[7]: **C08L 23/12**, C08L 23/02, C08J 5/00, B29C 47/02, H01B 17/58, H01B 7/28, B29K 23/00, B29L 23/00, C08L 23/10

(86) International application number:
**PCT/JP2001/004609**

(87) International publication number:
**WO 2001/092409 (06.12.2001 Gazette 2001/49)**

(54) **TUBULAR MOLDED PRODUCT, COATING MATERIAL FOR PROTECTION OF ELECTRIC WIRE AND RESIN FOR EXTRUDED PROFILE**

ROHRFÖRMIGES-FORMPRODUKT, BESCHICHTUNGSMATERIAL ZUM SCHUTZ VON ELEKTRISCHEN DRÄHTEN UND HARZ FÜR EXTRUDIERTES PROFIL

PRODUIT TUBULAIRE MOULE, MATERIAU DE REVETEMENT POUR LA PROTECTION DE FIL ELECTRIQUE ET RESINE POUR PROFILES EXTRUDES

(84) Designated Contracting States:
**DE FR GB IT**

(30) Priority: **01.06.2000 JP 2000164381**
**05.06.2000 JP 2000167448**
**19.06.2000 JP 2000182730**

(43) Date of publication of application:
**12.03.2003 Bulletin 2003/11**

(73) Proprietor: **IDEMITSU KOSAN CO., LTD.**
**Tokyo 100-8321 (JP)**

(72) Inventor: **KIJIMA, Masato**
**Ichihara-shi, Chiba 299-0107 (JP)**

(74) Representative:
**Gille Hrabal Struck Neidlein Prop Roos**
**Patentanwälte**
**Brucknerstrasse 20**
**40593 Düsseldorf (DE)**

(56) References cited:
**EP-A- 1 095 951**
**EP-A- 1 288 249**
**WO-A1-99/67303**
**JP-A- 2001 172 325**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 291 385 B1

## Description

### Technical Field

The present invention relates to (i) a tubular molded article such as hoses and tubes which comprises a single layer or a multilayer using a specific propylene polymer-containing resin composition and which can secure a transparency as well as characteristics such as a softness, a flexibility and a bending resistance and has a flexibility, and (ii) use of a specific resin for contour extrusion molding which can be used for the civil engineering & construction field, furniture, machinery parts and car components having complicated cross-sectional shapes.

### Background Art

Tubular molded articles having various sizes, shapes and structures which are suited to respective uses such as various feeding and draining water, various supplying and draining liquids (oil and others), feeding and exhausting air, feeding and draining powder, electric and communication cable wiring, medical treatment, agriculture and civil engineering have so far been used as tubular molded articles having a flexibility such as hoses and tubes. Natural rubber, synthetic rubber such as ethylene-propylene copolymer rubber and styrene base copolymer rubber, polyvinyl chloride resins, low density polyethylene and ethylene-vinyl acetate copolymers are used as materials for these tubular molded articles.

Among them, polyvinyl chloride resins have widely been used by the reason of excellent mechanical characteristics, molding-ability, control of flexibility by a plasticizer and mass production at a relatively low cost. However, the polyvinyl chloride resins have a large specific gravity and therefore are inferior in a lightweight property, and they have an unsatisfactory cold resistance. In addition thereto, they have the serious problem that they generate poisonous gases in incinerating. Further, they have the problem that a plasticizer which is regarded as problematic as environmental hormone bleeds out during use over a long period of time to deteriorate the environment, and additionally, they have the problem that they are notably reduced in softness and flexibility.

Low density polyethylene is an inexpensive resin which is excellent in chemical resistance, anti-weatherability and molding-ability, but it has the problems that it is not satisfactory in terms of flexibility, elasticity, deformation recoverability, environmental stress fracture resistance and impact resistance, so that it is difficult to apply it to the fields where the flexibility is required. Further, an ethylene-vinyl acetate copolymer is excellent in flexibility and impact resistance but has the problem that it is too soft and has poor elasticity, so that it is inferior in shape-holding property. Further, it has the problems that it has a low abrasion resistance and is liable to be scratched and that it has also a low heat resistance.

Thus, the materials described above have the respective problems. Accordingly, it has been proposed to use thermoplastic elastomers obtained by blending crystalline polypropylene-based resins with ethylene-propylene copolymer rubbers and melt-kneading them using an organic peroxide. However, there are the new problems that they become expensive because of their complicated composition and control in the cross-linking structure and that they are reduced in a molding-ability due to the rubber component and the cross-linking structure and recovery for recycling is difficult.

Accordingly, proposed as further improving methods are (1) a method in which low density polyethylene is blended with a polyvinyl chloride resin or an ethylene-vinyl acetate copolymer and chlorinated polyethylene to thereby produce a hose having a thin wall and a small bulk which is tough and has flexibility (Japanese Patent Application Laid-Open No. 76118/1974), (2) a hose in which the hose wall is formed by a composition comprising 30 to 60 mass % of crystalline polypropylene and 40 to 70 mass % of an ethylene-propylene-diene ternary copolymer (Japanese Patent Application Laid-Open No. 126518/1976), (3) a hose used for a washing machine in which the cross section is composed in a compressed elliptic form and which comprises a soft plastic having a wall thickness of 0.3 to 1.5 mm, wherein soft polyethylene and soft polypropylene are given as examples of the resin (Japanese Patent Application Laid-Open No. 55267/1977) and (4) a duct hose for automobile which is formed by a propylene homopolymer block part, a random polymer block part of propylene with a linear or branched $\alpha$-olefin having 5 to 12 carbon atoms and a random copolymer block part of ethylene with a linear or branched $\alpha$-olefin having 5 to 12 carbon atoms (Japanese Patent Application Laid-Open No. 72043/1981).

However, remained in all of the methods of (1) to (4) described above are the problems that there is a lack of balance in characteristics required to the tubular molded article having flexibility, a suitable elasticity, mechanical characteristics and surface characteristics and that the production processes are complicated or they have a cross-linking structure and therefore can not be recycled.

Proposed as a further improved method in Japanese Patent Application Laid-Open No. 110016/1998 are (5) a flexible hose and a resin composition for a flexible hose comprising an ethylene-$\alpha$-olefin copolymer which is prepared by copolymerizing ethylene with $\alpha$-olefin having 3 to 20 carbon atoms in the presence of a catalyst comprising an

organic cyclic compound having at least a conjugated double bond and a group IV transition metal compound in the periodic table and which satisfies requirements of:

(a) the melt flow rate is 0.01 to 20 g/10 minutes,
(b) the density is 0.86 to 0.91 g/$cm^3$,
(c) the molecular weight distribution (Mw/Mn) is 1.15 to 5.0,
(d) the composition distribution parameter (Cb) is 1.08 to 2.00,
(e) when the relationship between the amount (X) (mass %) of an ortho-dichlorobenzene (ODCB) soluble at 25°C, the density (d) and the melt flow rate (MFR) is (1) X is <0.2 in the case of d - 0.08 × log MFR≧0.93, while (2) X is <$9.8 \times 10^3 \times (0.9300 - d + 0.008 \times \log MFR)^2 + 2.0$ in the case of d - 0.08 × log MFR<0.93, and
(f) there are a plurality of peaks in the curve of the elution temperature - elution amount obtained by continuous temperature rise elution fractionation (TREF).

To summarize, disclosed in the application is a flexible hose comprising a resin composition containing at least an ethylene-α-olefin copolymer which is produced using a metallocene-based catalyst and which satisfies specific parameters and has particularly a density of 0.86 to 0.91 g/$cm^3$. This copolymer is intended to improve the stickiness and heat resistance provided to a flexible hose comprising an ethylene-α-olefin copolymer having a similar density which is obtained with a conventional titanium-based catalyst.

Further, disclosed in Japanese Patent Application Laid-Open No. 63585/2000 is (6) a tubular material comprising a partially or perfectly cross-linked composition comprising (A) 1 to 99 mass parts of an ethylene-α-olefin copolymer produced from ethylene and α-olefin having 6 to 12 carbon atoms in the presence of a metallocene-based catalyst and (B) 1 to 99 mass parts of a propylene resin, wherein the total amount of the components (A) and (B) is 100 mass parts.

However, the α-olefins contained in the ethylene-α-olefin copolymers used in the foregoing (5) and (6) have a relative large amount, and stickiness is still observed, though improved. Accordingly, the molding-ability is reduced, and brings about problems on handling of the tubular molded articles and production of contamination. Further, when the cross-linked composition of (6) is used comprising the mixture with the propylene base resin, the production method and stabilization of the physical properties are difficult, and miscibility of both resins is low, so that it is difficult in a certain case to obtain the tubular material having an excellent transparency, which brings about the problem that the uses thereof are restricted to a large extent.

Accordingly, these ethylene-α-olefin copolymers prepared by using either conventional titanium base catalyst or metallocene base catalyst have a narrow range of flexibility, and stickiness cannot be avoided in order to secure the flexibility. Thus, the situation is that it is difficult to allow the bending resistance by the deformation recoverability to stand together therewith. Further, the transparency is not satisfactory, and the large problem that polyvinyl chloride cannot be substituted depending on the use fields still remains.

Accordingly, a first object of the present invention is to provide a tubular molded article comprising an olefin base resin which has good flexibility and feel (soft and no sticky feeling) required to flexible hoses and tubes, which is excellent in its mechanical strength, which has transparency and no sticky feeling and is excellent in molding-ability, which does not contain chlorine and is not likely to generate poisonous gases such as hydrogen chloride gas and dioxin in wasting and incinerating and which is friendly to the earth environment.

Polyvinyl chloride resins and polyethylene resins are used as covering material for protecting an electric wire such as a sheath and a jacket. However, the existing situation is that a large amount of plasticizers is added to polyvinyl chloride resins in order to enhance the processing ability and provide them with flexibility. Accordingly, covering materials for protecting an electric wire which are made of polyvinyl chloride resins have the defect that the mechanical characteristics are changed by bleeding-out of the plasticizers, so that they are likely to exert an electrical adverse effect. Further, pointed out is the problem on an environmental sanitation that polyvinyl chloride resins generate hydrogen chloride gas and dioxin in incinerating. In addition thereto, it is pointed out that the plasticizers used for plasticization are likely to exert an adverse effect as environmental hormone to the human body. On the other hand, polyethylene resins have had the defect that they are inferior concerning their environmental stress fracture resistant characteristic. Accordingly, polyolefin-based resins are actively developed as an alternative material thereof in recent years. However, when polyolefin-based resins are used, they have to be copolymerized or blended with a rubber component in order to reveal flexibility. This brings about the problem that stickiness is induced by low molecular weight components and copolymer components.

Accordingly, it is wanted to provide a covering material for protecting an electric wire which is excellent in a molding-ability and friendly to the earth environment and which is less sticky and excellent as well in softness and a transparency.

Further, a contour extrusion-molded article having a complicated cross-sectional shape is used in many fields such as the civil engineering & construction field, furnitures, machinery parts and car components. The polyvinyl chloride-based resins have mainly been used as materials for the foregoing contour extrusion-molded articles. However, pointed out is the problem on environmental sanitation that the polyvinyl chloride resins generate hydrogen chloride gas and dioxin in incinerating. In addition thereto, it is pointed out that plasticizers used for plasticization are likely to exert an adverse effect as environmental hormone to the human body. Accordingly, polyolefin-based resins have actively been developed as an alternative material thereof in recent years. However, conventional polyolefin-based resins such as polyethylene and polypropylene have to be copolymerized or blended with a rubber component in order to reveal flexibility. This brings about the problem that stickiness is induceed by low molecular weight components and copolymer components. Further, they have a very large molding shrinkage rate of 10 to 20 times those of polyvinyl chloride resins, and therefore there has been the problem that molding thereof by contour extrusion causes warpage and deformation on the resulting molded article, so that the article having a good dimensional accuracy cannot be obtained. Further, a method in which specific polypropylene is used is proposed in Japanese Patent Application Laid-Open No. 247318/1995, but it was not satisfactory in terms of flexibility and transparency.

Accordingly, a further object of the present invention is to improve the foregoing problems in a contour extrusion-molded article and provide the use of a resin for contour extrusion molding which is excellent in a molding-ability and causes less warpage and deformation, which is friendly to the earth environment and less sticky and which is excellent as well in softness and transparency and a molded article thereof.

Wrap films and shrink films are described in EP -A- 1 288 249 which are formed from a resin composition containing (I) a propylene polymer in an amount of 1 to 99 moss%, and (II) an olefin-based polymer in an amount of 99 to 1 mass%, wherein (I) the propylene polymer satisfies the following requirements of (1) a meso pentad fraction (mmmm) is 0.2 to 0.6, and (2) a racemic pentad fraction (rrrr) and (/1-mmmm) satisfy the following relation: [rrrr/(1-mmmm)] $\leq$ 0.1.

Further propylene polymers are described in EP -A- 1 095 951.

## DISCLOSURE OF THE INVENTION

The present inventors have repeated intensive investigations of applications, various required characteristics and required levels of a tubular molded article such as flexible hoses in which polyvinyl chloride resins are used in many cases. As a result thereof, they have found that when used is a resin composition comprising a specific propylene polymer and an olefin-based polymer, obtained is a tubular molded article which has characteristics comparable with various characteristics endowed to a polyvinyl chloride resin, which does not contain chlorine and does not generate poisonous gases such as hydrogen chloride gas and dioxin in wasting and incinerating, which does not bring about a problem of a plasticizer regarded as problematic as environmental hormone and which is less liable to contaminate the environment.

Further, the present inventors have found that the foregoing resin composition can achieve the objects of the covering material for protecting an electric wire and the resin for contour extrusion molding, and they have come to complete the present invention.

The present invention has been made based on the foregoing knowledge.

That is, the present invention provides a tubular molded article, a covering material for protecting an electric wire and a resin for contour extrusion molding each described below.

(1) A tubular molded article formed from a resin composition comprising [I] a propylene polymer in an amount of 1 to 99 mass %, and [II] an olefin-based polymer in an amount of 99 to 1 mass %,
wherein [I] the propylene polymer satisfies the following requirement of:

(i) the meso pentad fraction (mmmm) is 0.2 to 0.6,
(ii) the racemic pentad fraction (rrrr) and (1 - mmmm) satisfy the following relation: [rrrr/(1 - mmmm)] $\leq$ 0.1 and
(iii) the melting endotherm amount $\Delta H$ (J/g) determined by differential scanning calorimeter (DSC) satisfies the following relation:

$$30 \geq \Delta H \geq 24.$$

(2) The tubular molded article as described in item (1), wherein [I] the propylene polymer is a propylene polymer satisfying the following requirement of:

(iv) the intrinsic viscosity [η] measured at 1 35°C in tetralin is 1.0 to 3.0 deciliter/g.

(3) The tubular molded article as described in item (1) or item (2),

wherein [I] the propylene polymer is a propylene polymer satisfying the following requirement of:

(v) the amount of a component eluted at 25°C or lower in temperature rise chromatography (W25) is 20 to 100 mass %.

(4) The tubular molded article as described in any one of items (1) to (3), wherein [I] the propylene polymer is polymerized using a metallocene catalyst comprising a transition metal compound having a cross-linking structure formed via two cross-linking groups and a promoter.
(5) The tubular molded article as described in any one of items (1) to (4), wherein [II] the olefin-based polymer is a propylene base polymer.
(6) A multilayer tubular molded article having at least one layer comprising the resin composition as described in item (1).
(7) A molded article obtained by subjecting the resin for contour extrusion molding comprising the resin composition as described in any one of items (1) to (4) to contour extrusion molding.
(8) Use of a resin comprising the resin composition as described in any one of items (1) to (4) for contour extrusion molding.

BRIEF DESCRIPTION OF THE DRAWINGS

Fig. 1 is a cross sectional view of a dice in an extruding machine used in Examples 9 to 11 of the present invention and Comparative Examples 5 to 6.
Fig. 2 is an explanatory drawing for evaluating a warpage of the contour extrusion molded article used in the same examples and comparative examples.

EXPLANATION OF CHARACTERS IN THE DRAWINGS

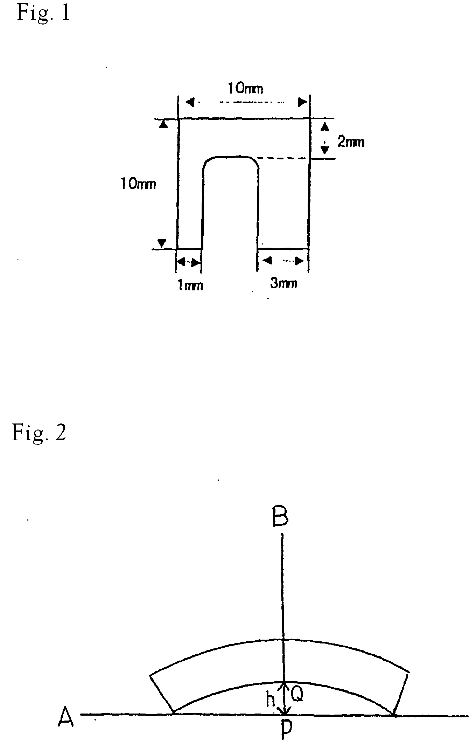

In Fig. 2, A is a line connecting between both ends of a test piece laid on a plane; P is an intermediate point thereof; B is a vertical line thereof; Q is an intersection point thereof with an inner surface of the test piece; and h is a measure of warpage represented by a length between P and Q.

BEST MODE FOR CARRYING OUT THE INVENTION

The present invention relates to the tubular molded article formed from a resin composition comprising [I] a specific propylene polymer in an amount of 1 to 99 mass % and [II] the olefin-based polymer in an amount of 99 to 1 mass %.
The tubular molded article of the present invention is a tubular molded article having flexibility which is a material for hoses, tubes and specifically shaped or tube-shaped vessels obtained by subjecting the resin composition comprising [I] the propylene polymer as an essential component to extrusion molding and blow molding.
The present invention shall be explained below in details.

[Resin composition]

The [I] specific propylene polymer used in the present invention is a propylene polymer satisfying the following requirement of:

(1) the meso pentad fraction (mmmm) is 0.2 to 0.6 and
(2) the racemic pentad fraction (rrrr) and (1 - mmmm) satisfy the following relation:

$$[rrrr/(1 - mmmm)] \leqq 0.1$$

The propylene polymer in the present invention may satisfy the requirements (1) and (2) described above, wherein the meso pentad fraction (mmmm) is preferably 0.3 to 0.5, more preferably 0.4 to 0.5, the racemic pentad fraction (rrrr) and (1 - mmmm) satisfy preferably $[rrrr/(1 - mmmm)] \leqq 0.08$, more preferably $[rrrr/(1 - mmmm)] \leqq 0.06$ and particularly preferably $[rrrr/(1 - mmmm)] \leqq 0.05$.

When (1) the meso pentad fraction (mmmm) of [I] the propylene polymer exceeds 0.6 and when (2) the relation

of the racemic pentad fraction (rrrr) to (1 - mmmm) is not satisfied, the flexibility and the transparency of the tubular molded article do not become satisfactory in a certain case. On the other hand, when (1) the meso pentad fraction (mmmm) is less than 0.2, the tubular molded article shall not be suitable for molding-ability, troubles caused by bleeding of the additives and reduction in strength.

If [I] the propylene polymer satisfies the relation described above, excellent is the balance between the amount of sticky components, the reduction in elastic modulus and transparency in the covering material for protecting an electric wire and the resin for contour extrusion molding. That is, they have the advantages that they are reduced in elastic modulus, excellent in softness (called as well flexibility), reduced in sticky components, excellent in surface characteristics (for example, represented by reduction in bleeding and transferring of the sticky components onto the other products) and excellent as well in transparency.

If the propylene polymer described above has a meso pentad fraction (mmmm) of less than 0.2, it causes stickiness. If it exceeds 0.6, the elastic modulus is elevated, and therefore it is not preferred. If [rrrr/ (1 - mmmm) ] of the propylene polymer described above exceeds 0.1, it causes stickiness.

The meso pentad fraction (mmmm rate) used in the present invention is a meso fraction in a pentad unit in a polypropylene molecular chain which is measured by a signal of methyl in the $^{13}$C-NMR spectrum according to the method in "Macromolecules, 6, 925 (1973)" proposed by A. Zambelli et al. If this becomes larger, it means that the stereoregularity becomes higher. Similarly, the racemic pentad fraction (rrrr rate) is a racemic fraction in a pentad unit in a polypropylene molecular chain. [rrrr/ (1 - mmmm)] is determined from the rates of the pentad units described above and is an index showing uniformity in the stereoregularity distribution of the propylene polymer. If this value becomes larger, the stereoregularity distribution is expanded, which means that a mixture of high stereoregular PP and APP is produced as is the case with conventional polypropylene produced with existing catalysts and that stickiness grows large and the transparency is lowered. The $^{13}$C-NMR spectrum is measured by means of a peak attribution proposed in "Macromolecules, 8, 687 (1975)" by A. Zambelli et al. and by the use of the following apparatus under the following conditions.

| | |
|---|---|
| Apparatus | JNM-EX400-Model $^{13}$C-NMR spectrometer (produced by JEOL Ltd.) |
| Method | Complete proton decoupling method |
| Concentration | 220 mg/milliliter |
| Solvent | A mixed solvent of 1,2,4-trichlorobenzene and bi-benzene (with mass ratio of 90 : 10) |
| Temperature | 130°C |
| Pulse width | 45° |
| Pulse interval | 4 seconds |
| Integration | 10,000 times |

The [I] specific propylene polymer used in the present invention is a propylene polymer which furthermore satisfies the following requirement of :

(3) A melting endothermic amount ΔH determined by differential scanning colorimeter (DSC) of the polymer satisfies the relation 30 J/g ≥ ΔH ≥ 24 J/g. The value ΔH is an index showing whether or not it is soft. If this value grows large, it means that the elastic modulus is high and the softness is reduced.

The propylene polymer of the present invention preferably satisfies, in addition to the foregoing requirements, the following requirement of (4) the intrinsic viscosity [η] measured at 135°C in tetralin is 1.0 to 3.0 deciliter/g. Especially, it is more preferable to be 1.0 to 2.5 deciliter/g, particularly preferable to be 1.1 to 2.2 deciliter/g. If the intrinsic viscosity is less than 1.0 deciliter/g, stickiness is caused in a certain case. On the other hand, when it exceeds 3.0 deciliter/g, the fluidity is reduced, so that the molding-ability is deteriorated in some cases.

Further, the propylene polymer in the present invention preferably satisfies, in addition to the foregoing requirements of (1), (2), (3) and (4), the following requirement of: (5) the amount of the component eluted at 25°C or lower in temperature rise chromatography (W25) is 20 to 100 mass %. It is more preferable to be 30 to 100 mass %, particularly preferable to be 50 to 100 mass % and most preferable to be 60 to 100 mass %. W25 is defined as the amount of an eluted component (mass %) without being adsorbed onto a filler at a column temperature of 25°C in TREF in an elution curve obtained by measuring by temperature rise chromatography of an operation method, the apparatus structure and measuring conditions each described below in the Examples. W25 is an index showing whether or not a propylene polymer is soft. If this value grows large, it means that a component having a low elastic modulus is increased and/or that non-uniformity in a stereoregularity distribution is expanded. In the present invention, if W25

is less than 20 %, the flexibility is lost in a certain case, and therefore it is not preferred.

The propylene polymer employed in the present invention preferably also satisfies the following requirement of:

(i) A molecular weight distribution (Mn/Mw) measured by gel permeation chromatography (GPC) is 4 or less, more preferably 3.5 or less and particularly preferably 3 or less. When the molecular weight distribution (Mn/Mw) exceeds 4, stickiness is caused in a certain case. In the case of the tubular molded article, the Mn/Mw falls more preferably in a range of 3.5 to 1.5. The Mn/Mw described above is determined by a gel permeation chromatography (GPC) described below in the Examples.

(ii) The melting point (Tm) and the crystallization temperature (Tc) may be either present or absent, but they are preferably absent or have low values in terms of softness, and particularly Tm is preferably 100°C or lower. The value of ΔH, Tm and Tc are determined by means of DSC measurement described below in the Examples.

(iii) The tensile elastic modulus is preferably 100 MPa or less, more preferably 70 MPa or less. In the case of the tubular molded article, it is more preferably 20 to 100 MPa, particularly preferably 20 to 70 MPa.

The (I) propylene polymer used in the present invention satisfies the aforementioned specific requirement (1), (2) and (3). The propylene polymer may be copolymerized with comonomer (2 mass % or less) other than propylene. Examples of the comonomer include ethylene, 1-butene, 1-pentene, 4-methyl-1-pentene, 1-hexene, 1-octene, 1-decene, 1-dodecene, 1-tetradecene, 1-hexadecene, 1-octadecene and 1-eicocene. In the present invention, one or more kinds thereof can be used.

A production method for [I] the propylene polymer used in the present invention is preferably a method in which propylene is polymerized or copolymerized using a metallocene catalyst obtained by combining (A) a transition metal compound having a cross-linking structure formed via two cross-linking groups with (B) a promoter. Specific example includes a method in which polymerization of propylene or copolymerization of propylene in the presence of a polymerization catalyst containing (A) a transition metal compound and (B) a promoter component selected from among (B-1) a compound capable of forming an ionic complex through reaction with (A) the transition metal compound or a derivative thereof and (B-2) an aluminoxane, (A) the transition metallic compound being represented by the following Formula (I):

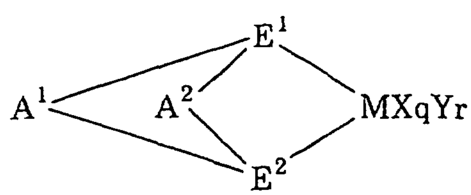

(I)

wherein M represents a metal element of the third to tenth group or the lanthanoid series in the periodic table; $E^1$ and $E^2$ each are ligands selected from a substituted cyclopentadienyl group, an indenyl group, a substituted indenyl group, a heterocyclopentadienyl group, a substituted heterocyclopentadienyl group, an amide group, a phosphide group, a hydrocarbon group and a silicon-containing group and form a cross-linking structure via $A^1$ and $A^2$, and they each may be the same as or different from each other; X represents a σ-bonding ligand, and when a plurality of ligand are present, plural of ligands may be the same or different and may be cross-linked with other X, $E^1$, $E^2$ or Y; Y represents a Lewis base, and when a plurality of bases is present, the bases may be the same or different and may be cross-linked with other Y, $E^1$, $E^2$ or X; $A^1$ and $A^2$ are divalent cross-linking groups combining two ligands and represent a hydrocarbon group having 1 to 20 carbon atoms, a halogen-containing hydrocarbon group having 1 to 20 carbon atoms, a silicon-containing group, a germanium-containing group, a tin-containing group,-O-, -CO-, -S-, $-SO_2-$, -Se-, $-NR^1-$, $-PR^1-$, $-P(O)R^1-$, $-BR^1-$ or $-AlR^1-$; $R^1$ represents a hydrogen atom, a halogen atom, a hydrocarbon group having 1 to 20 carbon atoms or a halogen-containing hydrocarbon group having 1 to 20 carbon atoms, and they may be the same as or different from each other; **q** represents an integer of 1 to 5 [(atomic value of M) - 2]; and **r** represents an integer of 0 to 3.

Specific examples of (A) the transition metal compound represented by Formula (I) include (1,2'-dimethylsilylene)(2,1'-dimethylsilylene)bis(3-n-butylindenyl)zirconium dichloride, (1,2'-dimethylsilylene)(2,1'-dimethylsilylene)bis(3-trimethylsilylmethylindenyl)zirconium dichloride, (1,2'-dimethylsilylene)(2,1'-dimethylsilylene)bis(3-phenylindenyl)zirconium dichloride, (1,2'-dimethylsilylene)(2,1'-dimethylsilylene)bis(4,5-benzoindenyl)zirconium dichloride, (1,2'-dimethylsilylene)(2,1'-dimethylsilylene)bis(4-isopropylindenyl)zirconium dichloride, (1,2'-dimethylsilylene)(2,1'-dimethylsilylene)bis(5,6-dimethylindenyl)zirconium dichloride, (1,2'-dimethylsilylene)(2,1'-dimethylsilylene)bis(4,7-di-ipropylindenyl)zirconium dichloride, (1,2'-dimethylsilylene)(2,1'-dimethylsilylene)bis(4-phenylindenyl)zirconium dichloride, (1,2'-dimethylsilylene)(2,1'-dimethylsilylene)bis(3-methyl-4-i-propylindenyl)zirconium dichloride, (1,2'-dimethylsilylene)(2,1'-dimethylsilylene)bis(5,6-benzoindenyl)zirconium dichloride, (1,2'-dimethylsilylene)(2,1'-isopropylidene)-bis(indenyl)zirconium dichloride, (1,2'-dimethylsilylene)(2,1'-isopropylidene)bis(3-methylindenyl)zirconium dichloride, (1,2'-dimethylsilylene)(2,1'-isopropylidene)bis(3-ipropylindenyl)zirconium dichloride, (1,2'-dimethylsilylene)(2,1'-isopropylidene)bis(3-n-butylindenyl)zirconium dichloride, (1,2'-dimethylsilylene)(2,1'-isopropylidene)bis(3-trimethylsilylmethylindenyl)zirconium dichloride and compounds obtained by substituting titanium or hafnium for zirconium in these compounds.

Next, examples of (B-1) component in the (B) promoter component include triethylammonium tetraphenylborate, tri-n-butylammonium tetraphenylborate, trimethylammonium tetraphenylborate, tetraethylammonium tetraphenylborate, methyl(tri-n-butyl)ammonium tetraphenylborate and benzyl(tri-n-butyl)ammonium tetraphenylborate.

These (B-1) components may be used alone or in combination of two or more kinds thereof.

On the other hand, examples of aluminoxane as the (B-2) component include methylaluminoxane, ethylaluminoxane and butylaluminoxane. These aluminoxanes may be used alone or in combination of two or more kinds thereof.

An organic aluminum compound can be used as a component (C) for the catalyst for polymerization described above in addition to the component (A) and the component (B) described above.

The organic aluminum compound of the component (C) includes trimethylaluminum, triethylaluminum, triisopropylaluminum, triisobutylaluminum, dimethylaluminum chloride, diethylaluminum chloride, methylaluminum dichloride, ethylaluminum dichloride, dimethylaluminum fluoride, diisobutylaluminum hydride, diethylaluminum hydride and ethylaluminum sesquichloride.

These organic aluminum compounds may be used alone or in combination of two or more kinds thereof.

In polymerizing propylene, at least one of the catalyst components can be used by carrying it on a suitable carrier.

The polymerization method shall not specifically be restricted, and any method of a slurry polymerization method, a gas phase polymerization method, a bulk polymerization method, a solution polymerization method and a suspension polymerization method may be used, and a bulk polymerization method and a solution polymerization method are particularly preferred.

The polymerization temperature is usually -100 to 250°C, and the use rate of the reaction raw materials to the catalyst is preferably 1 to $10^8$, particularly preferably 100 to $10^5$ in terms of raw material monomer/component (A) described above (mole ratio). Further, the polymerization time is usually 5 minutes to 10 hours, and the polymerization pressure is an atmospheric pressure to 20 MPa (gauge).

Next, [II] the olefin-based polymer used for the resin composition for the tubular molded article according to the present invention shall be explained.

The [II] olefin-based polymer used for the tubular molded article shall not specifically be restricted and is a publicly known olefin-based polymer. It includes, for example, linear low density polyethylene (called LLDPE) having a density of 850 to 940 kg/$m^3$ such as high pressure process low density polyethylene, ethylene-1-butene copolymers, ethylene-4-methyl-1-pentene copolymers, ethylene-1-hexene copolymers and ethylene-1-octene copolymers, high density polyethylene resins, polypropylene resins, random polypropylene resins, blocked polypropylene resins, syndiotactic polypropylene resins, low crystalline polypropylene resins, polybutene resins, ethylene-vinyl acetate copolymers, ethylene-cyclic olefin copolymers, ethylene-acrylic acid copolymers and ionomer resins, and ethylene-propylene rubbers. These resins may be used alone or in combination of two or more kinds thereof.

Among them, propylene-based polymers and ethylene-$\alpha$-olefin copolymers are preferably used. In the present invention, it is a matter of course that the principal component of the resin composition forming the tubular molded article is [I] the specific propylene polymer which has a good miscibility with conventional polypropylene resins, and it has the large characteristic that even if it is a composition with an ethylene-$\alpha$-olefin copolymer, it has an excellent miscibility, though it is occasionally a little reduced in transparency.

The resin composition forming the tubular molded article of the present invention comprises [I] a propylene polymer in an amount of 1 to 99 mass %, and [II] an olefin-based polymer in an amount of 99 to 1 mass % (the total amount of [I] and [II] is 100 mass %). It comprises preferably [I] a propylene polymer in an amount of 20 to 96 mass %, and [II] an olefin-based polymer in an amount of 80 to 4 mass %. It comprises more preferably [I] a propylene polymer in an amount of 30 to 94 mass %, and [II] an olefin-based polymer in an amount of 70 to 6 mass %. It comprises most preferably [I] a propylene polymer in an amount of 40 to 92 mass %, and [II] an olefin-based polymer in an amount of 60 to 8 mass %.

If [I] the propylene polymer described above has a small composition ratio, the tubular molded article is reduced in performances such as flexibility and transparency. On the other hand, if it is large, the molding-ability is inferior, and it is difficult in a certain case to stably produce the tubular molded article. Accordingly, a blending proportion thereof can suitably be selected based principally on the molding-ability, the flexibility and the transparency considering, for example, the meso pentad fraction and the intrinsic viscosity [$\eta$] of [I] the propylene polymer used and the kind, the molecular weight and the melt viscosity of [II] the olefin-based polymer.

The [II] olefin-based polymer used for the covering material for protecting an electric wire and the resin for contour extrusion molding includes polypropylene, propylene-ethylene copolymers, propylene-ethylene-diene copolymers, polyethylene, ethylene/$\alpha$-olefin copolymers, ethylene-vinyl acetate copolymers and hydrogenated styrene base elastomers. They may be used alone or in combination of two or more kinds thereof.

The resin composition used for contour extrusion molding comprises [I] a propylene polymer in an amount of 1 to 99 mass %, and [II] an olefin-based polymer in an amount of 99 to 1 mass %. It comprises preferably [I] a propylene polymer in an amount of 10 to 80 mass %, and [II] an olefin-based polymer in an amount of 90 to 20 mass %. It comprises more preferably [I] a propylene polymer in an amount of 25 to 75 mass %, and [II] an olefin-based polymer in an amount of 75 to 25 mass %. It comprises particularly preferably [I] a propylene polymer in an amount of 40 to 75 mass %, and [II] an olefin-based polymer in an amount of 60 to 25 mass %.

In producing the tubular molded article of the present invention, various additives publicly known could be blended, if necessary, with the resin composition.

Various additives, organic or inorganic fillers, other thermoplastic resins and rubbers which are normally used for olefin-based resins can be added as well, if necessary, to [I] the specific propylene polymer which is the raw material resin for the tubular molded article. The additives include surface function-improving agents such as antistatic agents and defogging agents, antioxidants, anti-weatherability agents, heat stabilizers, neutralizing agents, lubricants, nucleus-forming agents, colorants, flame retardants, metal deactivating agents and cross-linking agents. Further, the organic or inorganic fillers include glass powders, glass fibers, talc, mica, cellulose, cross-linked polyacrylic acid powders and carbon black. These additives and fillers may be used alone or in combination of two or more kinds thereof.

The antioxidants include, for example, phosphorus-based antioxidants, phenol-based antioxidants and sulfur-based antioxidants.

Specific examples of the phosphorus-based antioxidants include trisnonylphenyl phosphite, tris(2,4-di-t-butylphenyl) phosphite, distearylpentaerythritol phosphite, bis(2,4-di-t-butylphenyl)pentaerythritol phosphite, bis(2,6-di-t-butyl-4-methylphenyl)pentaerythritol phosphite, 2,2-methylenebis(4,6-di-t-butylphenyl)octyl phosphite, tetrakis(2,4-di-t-butylphenyl)-4,4-biphenylene diphosphite, Adekastab 1178 (available from Asahi Denka Co., Ltd.), Sumilizer TNP (available from Sumitomo Chemical Ind. Co., Ltd.), JP-135 (available from by Johoku Chemical Co., Ltd.), Adekastab 2112 (available from Asahi Denka Co., Ltd.), JPP-2000 (available from by Johoku Chemical Co., Ltd.), Weston 618 (available from General Electric Corp.), Adekastab PEP-24G (available from Asahi Denka Co., Ltd.), Adekastab PEP-36 (available from Asahi Denka Co., Ltd.), Adekastab HP-10 (available from Asahi Denka Co., Ltd.), Sandstab P-EPQ (available from Sand Co., Ltd.) and Irgafos 168 (available from Ciba Specialty Chemicals Corp.).

Specific examples of the phenol-based antioxidants include 2,6-di-t-butyl-4-methylphenol, n-octadecyl-3-(3',5'-di-t-butyl-4'-hydroxyphenyl) propionate, tetrakis[methylene-3-(3,5-di-t-butyl-4-hydroxyphenyl) propionate]methane, tris(3,5-di-t-butyl-4-hydroxybenzyl) isocyanurate, 4,4'-butylidenebis-(3-methyl-6-t-butylphenol), triethylene glycol bis [3-(3-t-butyl-4-hydroxy-5-methylphenyl) propionate], 3,9-bis{2-[3-(3-t-butyl-4-hydroxy-5-methylphenyl)propionyloxy]-1,1-dimethylethyl}-2,4,8,10-tetraoxaspiro[5,5]undecane, Sumilizer BHT (available from by Sumitomo Chemical Ind. Co., Ltd.), Yoshinox BHT (available from Yoshino Pharmaceutical Co., Ltd.), Antage BHT (available from Kawaguchi Chemical Co., Ltd.), Irganox 1076 (available from Ciba Specialty Chemicals Corp.), Irganox 1010 (available from Ciba Specialty Chemicals Corp.), Adekastab AO-60 (available from Asahi Denka Co., Ltd.), Sumilizer BP-101 (available from Sumitomo Chemical Ind. Co., Ltd.), Tominox TT (available from Yoshino Pharmaceutical Co., Ltd.), TTHP (available from Toray Co., Ltd.), Irganox 3114 (available from Ciba Specialty Chemicals Corp.), Adekastab AO-20 (available from Asahi Denka Co., Ltd.), Adekastab AO-40 (available from Asahi Denka Co., Ltd.), Sumilizer BBM-S (available from Sumitomo Chemical Ind. Co., Ltd.), Yoshinox BB (available from Yoshino Pharmaceutical Co., Ltd.), Antage W-300 (available from Kawaguchi Chemical Co., Ltd.), Irganox 245 (available from Ciba Specialty Chemicals Corp.), Adekastab AO-70 (available from Asahi Denka Co., Ltd.), Tominox 917 (available from Yoshino Pharmaceutical Co., Ltd.), Adekastab AO-80 (available from Asahi Denka Co., Ltd.) and Sumilizer GA-80 (available from Sumitomo Chemical Ind. Co., Ltd.).

Specific examples of the sulfur-based antioxidants include dilauryl-3,3'-thiodipropionate, dimyristyl-3,3'-thiodipropionate, distearyl-3,3'-thiodipropionate, pentaerythritol tetrakis(3-laurylthiopropionate), Sumilizer TPL (available from Sumitomo Chemical Ind. Co., Ltd.), Yoshinox DLTP (available from Yoshino Pharmaceutical Co., Ltd.), Antiox L (available from Nippon Oil & Fat Co., Ltd.), Sumilizer TPM (available from Sumitomo Chemical Ind. Co., Ltd.), Yoshinox DMTP (available from Yoshino Pharmaceutical Co., Ltd.), Antiox M (available from Nippon Oil & Fat Co., Ltd.), Sumilizer TPS (available from Sumitomo Chemical Ind. Co., Ltd.), Yoshinox DSTP (available from Yoshino Pharmaceutical Co., Ltd.), Antiox S (available from Nippon Oil & Fat Co., Ltd.), Adekastab AO-412S (available from Asahi Denka Co., Ltd.), SEENOX 412S (available from Sipro Kasei Co., Ltd.) and Sumilizer TDP (available from Sumitomo Chemical Ind. Co., Ltd.).

Among them, particularly preferred are Irganox 1010: material name: pentaerythritol-tetrakis[3-(3,5-di-t-butyl-4-hydroxyphenyl) propionate], Irgafos 168: material name: tris(2,4-di-t-butylphenyl) phosphite, Irganox 1076: material name: octadecyl-3-(3,5-di-t-butyl-4-hydroxyphenyl) propionate, Irganox 1330: material name: 1,3,5-trimethyl-2,4,6-tris(3,5-di-t-butyl-4-hydroxybenzyl)benzene, Irganox 3114: material name: tris(3,5-di-t-butyl-4-hydroxybenzyl) isocyanurate and P-EPQ: material name: tetrakis(2,4-di-t-butylphenyl) 4,4'-biphenylene-di-phosphite.

When an antioxidant is used in the tubular molded article of the present invention, 0.001 to 1 part by weight of the antioxidant per 100 parts by weight of the resin composition may be added. This makes it possible to prevent yellowing and is preferred.

Specific use examples of the antioxidants described above shall be given below:

| | | |
|---|---|---|
| Use example 1 | Irganox 1010 | 1,000 ppm |
| | PEP-Q | 1,000 ppm |
| Use example 2 | Irganox 1076 | 1,200 ppm |
| | PEP-Q | 600 ppm |
| | Irgafos 168 | 800 ppm |
| Use example 3 | Irganox 1010 | 400 to 1,000 ppm |
| | Irgafos 168 | 750 to 1,500 ppm |

Particularly preferred as the neutralizing agent are calcium stearate, zinc stearate, magnesium stearate, hydrotalcite (DHT-4A): composition formula: $Mg_{4.5}Al_2(OH)_{13}CO_3{\cdot}3.5H_2O$ and [Mizukalac H-1 available from Mizusawa Chemical Co., Ltd.]: composition formula: $Li_2Al_4(OH)_{12}CO_3{\cdot}3H_2O$.

As the antiblocking agent, "Sailicia" (synthetic silica series) available from Fuji Silicia Co., Ltd. and "Mizukasil" (synthetic silica series) available from Mizusawa Chemical Co., Ltd. Are particularly preferred.

Particularly preferred as the slipping agent are erucic acid amide, oleic acid amide, stearic acid amide, behenic acid amide, ethylenebisstearic acid amide, ethylenebisoleic acid amide, stearylerucamide and oleylpalmitamide.

Typical examples of the defogging agent include glycerin fatty acid ester compounds such as (di)glycerin mono(di, tri)oleate, (di)glycerin mono(di, tri)stearate, (di)glycerin mono(di, tri)palmitate and (di)glycerin mono(di, tri) laurate, sorbitan fatty acid ester compounds such as sorbitan laurate, sorbitan palmitate, sorbitan (tri)stearate and sorbitan (tri)oleate and ethylene oxide adducts such as polyoxyethylene alkyl(phenyl) ether, polyoxyethylene sorbitan monooleate and polyoxyethylene glycerin monostearate.

When a nucleus-forming agent is used, the added amount of the nucleus-forming agent falls in a range of usually 10 ppm or more, preferably 10 to 10,000 ppm, more preferably 10 to 5,000 ppm and further preferably 10 to 2,500 ppm based on the resin composition comprising [I] the propylene polymer and [II] the olefin-based polymer.

The resin composition forming the tubular molded article of the present invention can be produced by a method in which prescribed amounts of [I] the propylene polymer, [II] the olefin-based polymer are added and various additives added if necessary and in which the mixture is pelletized by a conventional method, for example, by means of an extrusion-molding machine and a melt-kneader such as a Banbury mixer. Then, this resin composition pellet is molten and molded, whereby the tubular molded article can be obtained.

In the first aspect of the tubular molded article of the present invention, it may be the molded article using the resin composition comprising [I] the propylene polymer and [II] the olefin-based polymer will do, and it is a matter of course that it is possible to prepare the tubular molded article comprising plural layers having different characteristics such as the isotactic pentad fraction and the intrinsic viscosity [η] of [I] the propylene polymer, that is, using two or more kinds of the polymers having a different flexibility in a range of the characteristics of [I] or [II] described above depending on the application purpose of the tubular molded article.

The second aspect of the tubular molded article of the present invention relates to a multilayer tubular molded article. It relates to a tubular molded article comprising a layer comprising the resin composition comprising [I] the propylene polymer and [II] the olefin-based polymer and other thermoplastic resin layers.

The other thermoplastic resins shall not specifically be restricted and can suitably be selected based on various uses and the required characteristics. To be specific, they include, for example, linear low density polyethylene (called LLDPE) such as high pressure process low density polyethylene, ethylene-1-butene copolymers, ethylene-4-methyl-1-pentene copolymers, ethylene-1-hexene copolymers and ethylene-1-octene copolymers, polyolefin base resins such as high density polyethylene resins, ultra low density ethylene-α-olefin copolymers, polypropylene resins, random polypropylene resins, blocked polypropylene resins, syndiotactic polypropylene resins, low crystalline polypropylene resins, polybutene resins, ethylene-vinyl acetate copolymers, ethylene-vinyl alcohol copolymers, other α-olefin-cyclic olefin copolymers, α-olefin-styrene copolymers, ethylene-acrylic acid copolymers and ionomer resins, ethylene-propylene rubbers and ethylene-propylene-diene rubbers, polyamide base resins, polyethylene terephthalate resins, polybutylene terephthalate resins and polycarbonate resins.

Among these thermoplastic resins, the polyolefin-based resins are preferred, and the polypropylene-based resins and the ethylene-α-olefin copolymers having a density of 850 to 940 $kg/m^3$ are particularly preferably used. Different additives can be added to these multilayer tubular molded articles according to the purposes.

In this multilayer tubular molded article, resins are selected based on the hardness (scratching property), the heat resistance, the chemical resistance, the gas barrier property, the steam barrier property, the light-shielding property, the transparency, the flexibility, the bending resistance, the pin hole resistance, the antiblocking property, the additive transfer property, the biological aptitude and the balance between the other mechanical characteristics and the safety in the inner and external layers. The layer thickness ratio is suitably selected considering uses of the tubular molded article, and it is usually 50 : 50 to 97 : 3, preferably 60 : 40 to 95 : 5 in terms of the resin composition : the other thermoplastic resin (thickness ratio). The multilayer tubular molded article can comprise three layers or more, if necessary.

The tubular molded article of the present invention can be obtained by molding a substantially single layer tubular molded article using the resin composition comprising [I] the specific propylene polymer and [II] the olefin-based polymer or a multilayer tubular molded article by combining it with the other thermoplastic resin. A molding method of the tubular molded article can suitably be selected depending on the shape and the length of the molded article, and an extrusion molding method is usually employed for producing a long molded article. However, in the case of molded articles having a specific length or molded articles which have a complicated cross-sectional shape or in which the curvature is not fixed in the longitudinal direction or the cross-sectional shape is different, for example, duct hoses, a blow molding method is preferably employed. Further, they can be produced as well by an injection molding method. In such tubular molded articles (hoses and tubes) of uses in which the length is relatively specified, a mounting part can be molded at the same time at an end part of the molded article.

The tubular molded articles (hoses and tubes) shall not specifically be restricted in shape, and in addition to a tubular hose having a conventional form, it may be a corrugated hose and a spiral hose in terms of flexibility, strength, rigidity, bending property and rolling property. These corrugates and spirals may be formed only on an outside surface or an inside surface of a hose or on both inside and outside surfaces. Further, it can be reinforced by metal wires, metal fibers, synthetic fibers or woven cloths and knitted cloths comprising these fibers for the sake of elevating strength, heat resistance and bending resistance of the hose.

The tubular molded article of the present invention shall not specifically be restricted in outer diameter and is varied depending on uses thereof. It is usually 0.2 mm to 2,000 mm, and a wall thickness thereof is 0.01 mm to 20 mm.

As described above in details, the tubular molded article of the present invention maintains characteristics of polyvinyl chloride resins which have so far been used in many cases, such as softness, flexibility and transparency but does not contain chlorine which is regarded as problematic from the viewpoint of earth environment protection and also does not contain a plasticizer, and it is a tubular molded article having an excellent environmental resistance.

Accordingly, it is used as an alternative of a polyvinyl chloride resin and makes it possible to develop into fields where it has substantially been difficult to use polyvinyl chloride resins because of elution of a plasticizer, a bending resistance and a durability. To be specific, examples thereof include household and agricultural spray hoses, irrigation hoses, hoses for air and powder, feeding and draining hoses for a washing machine, drain hoses for an air conditioner, hoses for ducts of houses and cars, vacuum hoses for a vacuum cleaner, hoses for integrating electric and communication wires for houses, underground burying and cars, hoses for integrating optical fiber wires, hoses (tubes) for oil and washer liquid for automobiles, medical hoses (tubes) for transfusion for blood transfusion, oxygen inhalation and catheter, tube vessels for food packaging, toiletries and sanitary, sporting goods for ropes for rope jumping and packing ropes such as ropes for flexible containers.

[Production method for covering material for protecting an electric wire]

A covering material for protecting an electric wire is prepared by dry-blending [I] the propylene polymer described by above in an amount of 1 to 99 mass %, [II] the olefin-based polymer in an amount of 99 to 1 mass % and various optional additives by means of a Henschel mixer or the like and melt-kneading them by means of a single shaft or dual shaft extruding machine, a Banbury mixer or the like. Various additives used optionally include a softening agent, an inorganic filler, a pigment, a foaming agent and a flame retardant. The covering material for protecting an electric wire is less sticky and excellent in a softness and a transparency, and it can suitably be used for sheaths and jackets as a covering material for protecting an electric wire. The resulting covered electric wires are characterized by that they are excellent in a softness and less liable to be whitened when bent.

[Production method for resin for contour extrusion molding]

The resin for contour extrusion molding according to the use of the present invention is prepared by dry-blending [I] the propylene polymer described above in an amount of 1 to 99 mass %, [II] the olefin-based polymer in an amount of 99 to 1 mass % and various optional additives by means of a Henschel mixer or the like and melt-kneading them by means of a single shaft or dual shaft extruding machine, a Banbury mixer or the like. Various additives used optionally include a softening agent, an inorganic filler, a pigment, a foaming agent, a flame retardant and a nucleus-forming agent. The resin for contour extrusion molding according to the use of the present invention is excellent in molding-ability and has small warpage and deformation, and it is less sticky and excellent in a softness and a transparency. It is suited to a contour extrusion-molded article.

Next, this resin for contour extrusion molding is subjected to contour extrusion molding to obtain a molded article. This contour extrusion molding shall not specifically be restricted and can be carried out by means of publicly known contour extrusion molding apparatuses. In general, a contour extrusion molding apparatus includes ones comprising an extruder, a dice, a sizing device, a cooling device, a receiving device and a cutting device. To give one example as such, it includes a "profile extrusion molding apparatus" described in Japanese Patent Application Laid-Open No. 247318/1995. The contour extrusion molded article of the present invention has small warpage and deformation and excellent mechanical characteristics and touch (flexibility) and is less sticky, and therefore it is suitably used for car components, home electric appliance parts, medical goods, house and construction material parts, toys and miscellaneous goods. Further, it does not contain plasticizers that are concerned about harmfulness and is easily burned or recycled when wasted.

## EXAMPLES

The present invention shall more specifically be explained below with reference to examples.

[Production of propylene polymer (P1)]

(1) Synthesis of a complex

Synthesis of (1,2'-dimethylsilylene)(2,1'-dimethylsilylene)bis(3-trimethylsilylmethylindenyl)zirconium dichloride

In 50 milliliter of THF placed in a Schlenk bottle, 3.0 g (6.97 millimole) of a lithium salt of (1,2'-dimethylsilylene)(2,1'-dimethylsilylene)bis(indene) was dissolved in and the resultant solution was cooled down to -78°C. After slowly dropping 2.1 milliliter (14.2 millimole) of Iodomethyltrimethylsilane to the solution, the resultant mixture was stirred at room temperature for 12 hours. The solvent was removed from the mixture by distillation, and subsequently 50 milliliter of ether was added to the residue, which was subsequently washed with a saturated ammonium chloride solution. By drying an organic phase after phase separation of the residue and removing the solvent, 3.04 g (5.88 millimole) of (1,2'-dimethylsilylene)(2,1'-dimethylsilylene)bis(3-trimethylsilylmethylindene) was obtained. (Yield: 84 %)

Subsequently, 3.04 g (5.88 millimole) of (1,2'-dimethylsilylene)(2,1'-dimethylsilylene)bis(3-trimethylsilylmethylindene) obtained above and 50 milliliter of ether were placed in a Schlenk bottle under nitrogen gas flow. The resultant solution was cooled down to -78°C, and 7.6 milliliter (11.7 millimole) of n-BuLi (hexane solution 1.54 M) was added thereto, followed by stirring the solution at room temperature for 12 hours. The solvent was removed from the mixture through distillation, and the resulting solid product was washed with 40 milliliter of hexane to thereby obtain 3.06 g (5.07 millimole) of a lithium salt in the form of an ether addition product. (Yield: 73 %)

The obtained lithium salt was subjected to $^1$H-NMR (90 MHz, THF-d8) measurement. The result were as follows: δ 0.04 (s, 18H, trimethylsilyl), 0.48 (s, 12H, dimethylsilylene), 1.10 (t, 6H, methyl), 2.59 (s, 4H, methylene), 3.38 (q, 4H, methylene), 6.2-7.7 (m, 8H, Ar-H).

The lithium salt obtained above was dissolved in 50 milliliter of toluene under nitrogen gas flow. The resultant solution was cooled down to -78°C, and a suspension of 1.2 g (5.1 millimole) of zirconium tetrachloride in 20 milliliter of toluene, which had been cooled in advance to -78°C was added dropwise to the solution. After completion of addition, the resultant mixture was stirred at room temperature for 6 hours. The solvent was removed from the resultant reaction mixture through distillation. The resultant residue was recrystallized from dichchloromethane, to obtaine 0.9 g (1.33 millimole) of (1,2'-dimethylsilylene)(2,1'-dimethylsilylene)bis(3-trimethylsilylmethylindenyl)zirconium dichloride. (Yield: 26 %)

The obtained zirconium dichloride was subjected to $^1$H-NMR (90 MHz, $CDCl_3$) measurement. The results are as follows: δ 0.0 (s, 18H, trimethylsilyl), 1.02, 1.12 (s, 12H, dimethylsilylene), 2.51 (dd, 4H, methylene), 7.1-7.6 (m, 8H, Ar-H).

(2) Polymerization of propylene

A stainless-steel-made autoclave having an agitator and with a capacity of 10 liter succesively received 4 liter of n-heptane, 2 millimole of triisobutylaluminum, 2 millimole of methylaluminoxane (manufactured by Albemarle Co., Ltd.) and 2 micromole of (1,2'-dimethylsilylene)(2,1'-dimethylsilylene)bis-(3-trimethylsilylmethylindenyl)zirconium dichloride obtained above. After introducing hydrogen into the autoclave until the interior pressure reached 0.03 MPa (gauge), and while elevating the temperature of the autoclave up to 60°C, propylene gas was introduced into the

autoclave until the interior pressure reached to 0.8 MPa (gauge) to thereby allow polymerization to proceed. During the polymerization, propylene gas was continuously introduced into the autoclave by the use of a pressure-regulating apparatus, so as to maintain the interior pressure at 0.8 MPa (gauge). After the polymerization was performed at 60°C for 30 minutes, the resultant product was removed from the autoclave, and the product was dried under reduced pressure to thereby obtain a propylene polymer (P1).

(3) Pelletization of propylene polymer

The [I] propylene polymer obtained in (2) described above was blended with the following additives according to a recipe shown below, and the mixture was extruded and pelletized by means of a single shaft extruding machine (model 35-20, produced by Tsukada Juki Mfg. Co., Ltd.) to obtain pellets. Additive recipe:

- Phenol-based antioxidant:

    Irganox 1010 available from Ciba Specialty Chemicals Corp.: 500 ppm,

- Phosphorus-based antioxidant:

    Irgafos 168 available from Ciba Specialty Chemicals Corp.: 1,000 ppm,

The results obtained by "evaluation methods of resin characteristics of a propylene polymer" described below are shown in Table 1.

"Evaluation methods of resin characteristics of a propylene polymer"

(1) Measurement of the intrinsic viscosity [η]

The intrinsic viscosity [η] of the polymer was measured at 135°C in a tetralin solvent using an VMR-053 type automatic viscometer produced by Rigosha Co., Ltd.

(2) Measurement of the pentad fraction

The pentad fraction was measured by means of the above-described method in the present specification.

(3) Measurement of the melt flow rate (MFR)

The melt flow rate (MFR) was measured at 230°C and a load of 21.18 N in accordance with JIS K 7210.

(4) Measurement of molecular weight distribution (Mw/Mn)

Mw/Mn was measured using the following apparatus under the following condition.

| GPC measuring apparatus: | |
|---|---|
| Column | TOSO GMHHR-H (S) HT |
| Detector | RI detector for liquid chromotography WATERS 150C |
| Measuring conditions: | |
| Solvent | 1,2,4-trichlorobenzene |
| Measuring temperature | 145°C |
| Flow velocity | 1.0 milliliter/minute |
| Sample concentration | 2.2 mg/milliliter |
| Injection amount | 160 microliter |
| Calibration curve | Universal Calibration |
| Analytic program | HT-GPC (Ver. 1.0) |

(5) DSC measurement

A differential scanning type calorimeter (DSC-7, produced by Perkin Elmer Co., Ltd.) was used. After melting 10 mg of the sample by heating at 220°C for 3 minutes under nitrogen atmosphere, the melted sample was cooled to -40°C at a cooling rate of 1°C/minute and a crystallization exothermic curve was prepared. The temperature corresponding to the top of the maximum peak of the exothermic curve was defined as a crystallization temperature: Tc. Further, the sample was maintained at -40°C for 3 minutes, and then heated at a temperature rising rate of 10°C/minute to obtain a melting endothermic amount expressed as ΔH. The temperature corresponding to the top of the maximum peak of the melting endothermic curve obtained above was defined as the melting point: Tm.

(6) Temperature rise elution fractionation chromatography

The amount of a component which is not adsorbed onto a filler contained in a TREF column and is eluted from the column at a temperature of 25°C; i.e., W25 (mass %), was obtained on the basis of an elution curve through the following procedure.

(a) Operation method

A sample solution was introduced into a TREF column the temperature of which was regulated at 135°C, and then the temperature of the column was gradually lowered to 0°C with a cooling rate of 5°C/hour, and the temperature of the column was maintained at 0°C for 30 minutes, so that the sample was adsorbed onto a filler. Then, the column was heated up to 135°C at a rising rate of 40°C/hour to obtain an elution curve.

(b) Apparatus

| | |
|---|---|
| TREF column | silica gel column (4.6ϕ × 150 mm), produced by GL Science Co., Ltd. |
| Flow cell | KBr cell (optical path length: 1 mm), produced by GL Science Co., Ltd. |
| Liquid feeding pump | SSC-3100 pump, produced by Senshu Science Co., Ltd. |
| Valve oven | MODEL 554 oven (high temperature type), produced by GL Science Co., Ltd. |
| TREF oven | Product of GL Science Co., Ltd. |
| Dual system temperature controller | REX-C100 temperature controller, produced by Rigaku Kogyou Co., Ltd. |
| Detector | infrared detector for liquid chromatograph MIRAN 1A CVF, produced by FOXBORO Co., Ltd. |
| Ten-way valve | electric operated valve, produced by Balco Co., Ltd. |
| Loop | 500 microliter loop, produced by Balco Co., Ltd. |

(c) Measurement conditions

| | |
|---|---|
| Solvent | o-dichlorobenzene |
| Sample concentration | 7.5 g/liter |
| Injection amount | 500 microliter |
| Pumping flow rate | 2.0 milliliter/minute |

(continued)

| | |
|---|---|
| Detection wave number | 3.41 μm |
| Column filler | Chromosorb P (30 to 60 mesh) |
| Column temperature distribution | within ±0.2°C |

[Production of propylene polymer (P2)]

(1) Preparation of magnesium compound

A glass reactor having an agitator and with a capacity of about 6 liter was sufficiently replaced with nitrogen gas and then charged with about 2430 g of ethanol, 16 g of iodine and 160 g of metal magnesium, and the mixture was heated while agitating to react them under a refluxing condition until hydrogen gas was not observed to be generated from the system to obtain a solid product. A reaction liquid containing this solid product was dried under reduced pressure to thereby obtain a magnesium compound.

(2) Preparation of solid catalyst component (A)

A glass-made reactor with a capacity of 5 liter which was sufficiently replaced with nitrogen gas was charged with 160 g of the magnesium compound (not crushed) obtained in (1) described above, 80 milliliter of refined heptane, 24 milliliter of silicon tetrachloride and 23 milliliter of diethyl phthalate, and 770 milliliter of titanium tetrachloride was added thereto while maintaining the system at 80°C and agitating to react them at 110°C for 2 hours. Then, a solid component was separated and washed with refined heptane of 90°C. Further, 1220 milliliter of titanium tetrachloride was added thereto to react them at 110°C for 2 hours, and then it was sufficiently washed with refined heptane to obtain a solid catalyst component (A).

(3) Gas phase polymerization of propylene

In a polymerization vessel with a capacity of 200 liter, 6.0 g/hour of the solid catalyst component (A) obtained in (2) described above, 0.2 mole/hour of triisobutylaluminum (TIBA), 0.012 mole/hour of 1-allyl-3,4-dimethoxybenzene (ADMB), 0.012 mole/hour of cyclohexylmethyldimethoxysilane (CHMDMS) and 37 kg/hour of propylene were fed to carry out polymerization at 70°C and 2.8 MPa (gauge), whereby a propylene polymer was produced. The propylene powder thus obtained was mixed with 2,5-dimethyl-2,5-di-(t-butylperoxy)-hexane. Further, the following additives were added thereto in a recipe shown below, and the mixture was extruded and pelletized by means of a single shaft extruding machine (model 35-20, produced by Tsukada Juki Mfg. Co., Ltd.) to produce pellets. The pellet (P2) thus obtained was evaluated by the "evaluation methods of resin characteristics of a propylene polymer" described above, and the results obtained are shown in Table 1.

Additive recipe:

- Phenol-based antioxidant: Irganox 1010 available from by Ciba Specialty Chemicals Corp.: 1,000 ppm,
- Phosphorus-based antioxidant: P-EPQ: 500 ppm
- Neutralizing agent: calcium stearate: 500 ppm
- Neutralizing agent: DHT-4A: 500 ppm

[Production of propylene polymer (P3)]

A stainless-made autoclave with a capacity of 1 liter was charged with 400 milliliter of heptane, 0.5 millimole of triisobutylaluminum and a catalyst component prepared by preliminarily bringing 2 micromole of dimethylanilinium (pentafluorophenyl) borate into contact with 1 micromole of (t-butylamide)dimethyl(tetramethyl-η5-cyclopentadienyl) silanetitanium dichloride in toluene for 5 minutes. Then, after hydrogen was introduced thereinto at 0.03 MPa (gauge), propylene gas was introduced up to 0.8 MPa (gauge) in terms of the whole pressure to feed propylene through a pressure controller so that the pressure was fixed. The polymerization was carried out at a polymerization temperature of 70°C for one hour, and then the content was taken out and dried under reduced pressure to thereby obtain a propylene polymer (P3). It was evaluated by the "evaluation methods of resin characteristics of a propylene polymer" described

above, and the results obtained are shown in Table 1.

Table 1

| Resin characteristics | P1 | P2 | P3 |
|---|---|---|---|
| [η] (deciliter/g) | 2.1 | 2.1 | 1.9 |
| mmmm | 0.45 | 0.57 | 0.02 |
| rrrr | 0.024 | 0.09 | 0.108 |
| rrrr/(1 - mmmm) | 0.04 | 0.21 | 0.11 |
| W25 (mass %) | 91 | 30 | 99 |
| MFR (g/10 minutes) | 1.8 | 2 | 2 |
| Mw/Mn | 2.0 | 2.3 | 2.2 |
| ΔH (J/g) | 24 | 65.2 | Not observed |
| Tm (°C) | 79 | 159 | Not observed |
| Tc (°C) | 45 | 105 | Not observed |

Examples 1 to 4 and Comparative Examples 1 and 2

(a) Production of pellet

The propylene polymers (P1, P2 and P3) obtained above as [I] the propylene polymer were blended with IDEMITSU PP F-704NP (MFR = 7g/10 minute) and IDEMITSU PP F-774NP (MFR = 7g/10 minute) of crystalline polypropylene both available from Idemitsu Petrochemical Co., Ltd. and Affinity PL1880 of an ethylene-1-octene copolymer available from Dow Chemical Japan Ltd. as [II] the olefin-based polymer in a blend ratio (mass %) shown in Table 2, and the mixture was pelletized by means of a dual shaft knead-extruding machine to obtain pellets.

These pellets were extrusion-molded through a tubular die by means of a single shaft extrusion-molding machine to thereby mold tubes having an inner diameter of 2.6 mm and an outer diameter of 4.0 mm. The tubes and the press-molded sheets (thickness: 1 mm) at 230°C were evaluated based on the following evaluation methods. The results thereof are shown in Table 2.

[Evaluation methods]

(1) Evaluation of press sheet

① Haze (transparency) was measured in accordance with JIS K 7105
② Tensile elastic modulus was measured by a tensile test in accordance with JIS K 7127

(2) Evaluation of a tubular molded article

③ Feeling (soft to the touch without having sticky feeling) of the tubular molded article was evaluated sensually and classified in accordance with the following criteria.
A: very good, B: good, C: a little inferior
D: unsatisfactory
④ Transparency of the tubular molded article was evaluated by visual observation and classified in accordance with the following criteria.
A: very transparent, B: transparent,
C: a little hazy, D: heavily hazy
⑤ Total evaluation was classified in accordance with the following criteria.
A: very good, B: good, C: a little inferior
D: unsatisfactory

Table 2

| | | Example | | | | Comparative Example | |
|---|---|---|---|---|---|---|---|
| | | 1 | 2 | 3 | 4 | 1 | 2 |
| Polymer composition (mass %) | P1 | 70 | 70 | 50 | 50 | | |
| | P2 | | | | | 70 | |
| | P3 | | | | | | 50 |
| | F-704NP | 30 | | | | 30 | 50 |
| | F-744NP | | 30 | 50 | | | |
| | PL1880 | | | | 50 | | |
| Press sheet evaluation | Tensile elastic modulus (MPa) | 120 | 105 | 200 | 62 | 520 | 80 |
| | Haze (%) | 9.5 | 7.0 | 23 | 33 | 60 | 60 |
| Evaluation of tubular molded article | Feeling | A | A | B | A | D | B |
| | Transparency | A | A | B | C | D | D |
| | Total evaluation | A | A | B | B | D | D |
| | Remark | Totally very good | Totally very good | Totally good | Totally good | Unsatisfactory in flexibility and transparency | Unsatisfactory in transparency and stickiness |

Example 5

The pellets of P1 obtained above and IDEMITSU PP-704NP (hereinafter referred to as B1) available from Idemitsu Petrochemical Co., Ltd. were blended in a proportion of 70 mass % and 30 mass % respectively and extruded and pelletized by means of the same single shaft extruding machine (model 35-20, produced by Tsukada Juki Mfg. Co., Ltd.) as described above to obtain pellets as a covering material for protecting an electric wire. These pellets were press-molded (press temperature: 230°C, press pressure: 50 kg/cm$^2$, cooling temperature: 30°C) by means of a press molding machine (model YS-10, produced by Shindo Metal Ind. Co., Ltd.) to form a molded article (test piece: 1 mm thickness) for evaluating a covering material for protecting an electric wire.
The molded article was evaluated according to "evaluation methods of a covering material for protecting an electric wire" described below, and the results thereof are shown in Table 3.
Next, the pellets obtained above were used to extrude and cover an electric conductor having a outer diameter of 1.8 mmϕ as a core wire in a thickness of 1.8 mm by means of an extruding machine (L/D = 22) while longitudinally lapping a 10 μm paper separator to produce a covered electric wire. It was evaluated according to "evaluation methods of a covered electric wire" described below, and the results thereof are shown in Table 3.

"Evaluation methods of a covering material for protecting an electric wire"

1. Evaluation of a press-molded article

(1) Tensile elastic modulus

The tensile elastic modulus of the press-molded article was measured by a tensile test in accordance with JIS K 7127.

- Cross head speed: 50 mm/minute
- Load cell: 100 kg

(2) Haze (transparency)

The haze of the press-molded article was measured by a test in accordance with JIS K 7105.
The smaller the Haze, the more excellent the transparency.

2. Evaluation of a covered electric wire

(1) Molding-ability

The molding-ability of the covered electric wire was evaluated by visually observing the appearance of the covered electric wire and was classified in accordance with the following criteria.

A: not uneven in thickness and uniformly covered
B: a little uneven in thickness
C: uneven in thickness and inferior in uniformity

(2) Stickiness

The covered electric wire was touched with a hand and evaluated by the touch thereof and was classified in accordance with the following criteria.

A: not sticky at all
B: not sticky
C: a little sticky

(3) Whitening property by bending

The covered electric wire was bent, and a whitening state thereof was visually judged:

A: not whitened at all

D: whitened

Example 6

The same procedure as in Example 5 was carried out, except that in the production of the covering material for protecting an electric wire in Example 5, a proportion of (P1) was changed to 50 mass % and that a proportion of (B1) was changed to 50 mass %. The results obtained are shown in Table 3.

Example 7

The same procedure as in Example 5 was carried out, except that in the production of the covering material for protecting an electric wire in Example 5, a proportion of (P1) was changed to 50 mass % and that 30 mass % of (B1) was changed to 50 mass % of IDEMITSU PP F-744NP (hereinafter referred to as B2) available from Idemitsu Petrochemical Co., Ltd.. The results obtained are shown in Table 3.

Comparative Example 3

The same procedure as in Example 5 was carried out, except that in Example 5, the pellets of P1 were changed to the pellets of P2. The results obtained are shown in Table 3.

Comparative Example 4

The same procedure as in Example 6 was carried out, except that the P1 in the production of the covering material for protecting an electric wire in Example 6 was changed to P3 obtained above. The results obtained are shown in Table 3.

Table 3

| | | Example | | | Comparative Example | |
|---|---|---|---|---|---|---|
| | | 5 | 6 | 7 | 3 | 4 |
| Component [I] | P1 (mass %) | 70 | 50 | 50 | - | - |
| | P2 (mass %) | - | - | - | 70 | - |
| | P3 (mass %) | - | - | - | - | 50 |
| Component [II] | B1 (mass %) | 30 | 50 | - | 30 | 50 |
| | B2 (mass %) | - | - | 50 | - | - |
| | | - | - | - | - | - |
| Evaluation results | Tensile elastic modulus (MPa) | 130 | 290 | 200 | 530 | 81 |
| | Haze (%) | 9.5 | 22 | 13 | 60 | 61 |
| | Stickiness | B | A | A | A | C |
| | Molding-ability | A | A | A | B | C |
| | Bend-whitening | A | A | A | D | D |
| | Total evaluation | A | A | A | D | D |
| | Comment | Totally very good | Totally very good | Totally very good | Poor flexibility and whitened, thus impractical | Unsatisfactory stickiness and whitened, thus impractical |

Example 8

The pellets of P1 obtained above and IDEMITSU PP F-704NP (hereinafter referred to as B1) available from Idemitsu Petrochemical Co., Ltd. were blended in a proportion of 70 mass % and 30 mass % respectively and extruded and pelletized by means of the same single shaft extruding machine (model 35-20, produced by Tsukada Juki Mfg. Co., Ltd.) as described above to obtain pellets as a resin for contour extrusion molding. These pellets were press-molded (press temperature: 230°C, press pressure: 4.903 MPa (50 kg/cm$^2$), cooling temperature: 30°C) by means of a press molding machine (model YS-10, produced by Shindo Metal Ind. Co., Ltd.) to form a molded article (test piece: 1 mm thickness) for evaluating a resin for contour extrusion molding. Further, these pellets were extruded from a dice having a contour cross section as shown in Fig. 1 at a set temperature of 210°C by means of a 40 mmϕ extruding machine (produced by Tanabe Plastic Machinery Co., Ltd.) to obtain a molded article, and it was cut to a length of 100 cm to obtain a test piece.
It was evaluated according to "evaluation methods" described below, and the results thereof are shown in Table 4.

"Evaluation methods"

1. Evaluation of press-molded article

(1) Tensile elastic modulus

The tensile elastic modulus of the press-molded article was measured by a tensile test in accordance with JIS K 7127.

- Cross head speed: 50 mm/minute
- Load cell: 100 kg

(2) Haze (transparency)

The haze of the press-molded article was measured by a test in accordance with JIS K 7105.
The smaller the Haze, the more excellent the transparency.

2. Evaluation of contour-molded article

(1) Evaluation of a warpage

As shown in Fig. 2, the test piece is laid on a plane to determine an intersection point (Q) of a vertical line (B) passing through an intermediate point (P) of a line (A) connecting between both ends of the test piece with an inner surface of the test piece. A length between P and Q is set as a measure h of a warpage. The larger the warpage, the larger the value h becomes.
The mesured values were classified in accordance with the following criteria.

A: very good (h = 0)
B: good ($0 < h \leqq 5$ mm)
C: a little inferior ($5 < h \leqq 10$ mm)
D: inferior ($10 < h$)

(2) Sticky feeling

The molded article was touched with a hand and sensually evaluated by the touch thereof and was classified in accordance with the following criteria.

A: not sticky at all
B: little sticky
C: a little sticky
D: heavily sticky

Example 9

The same procedure as in Example 8 was carried out, except that in the production of the resin for contour extrusion molding in Example 8, B1 was changed to IDEMITSU PP F-744NP (hereinafter referred to as B2) available from Idemitsu Petrochemical Co., Ltd. The results obtained are shown in Table 4.

Example 10

The same procedure as in Example 9 was carried out, except that in the production of the resin for contour extrusion molding in Example 9, a proportion of P1 was changed to 50 mass % and that a proportion of B2 was changed to 50 mass %. The results obtained are shown in Table 4.

Example 11

The same procedure as in Example 10 was carried out, except that in the production of the resin for contour extrusion molding in Example 10, B2 was changed to Affinity PL1880 (hereinafter referred to as B3) available from Dow Chemical Japan Ltd. The results obtained are shown in Table 4.

Comparative Example 5

The same procedure as in Example 8 was carried out, except that in Example 8, the pellets of P1 were changed to the pellets of P2. The results obtained are shown in Table 4.

Comparative Example 6

The same procedure as in Example 8 was carried out, except that the P1 in the production of the resin for contour extrusion molding in Example 8 was changed to 50 mass % of P3 obtained above and that a proportion of B1 was changed to 50 mass %. The results obtained are shown in Table 4.

Table 4

| | | Example | | | |
|---|---|---|---|---|---|
| | | 8 | 9 | 10 | 11 |
| Component [I] | P1 (mass %) | 70 | 70 | 50 | 50 |
| | P2 (mass %) | - | - | - | - |
| | P3 (mass %) | - | - | - | - |
| Component [II] | B1 (mass %) | 30 | - | - | - |
| | B2 (mass %) | - | 30 | 50 | - |
| | B3 (mass %) | - | - | - | 50 |
| Evaluation results | Tensile elastic modulus (MPa) | 120 | 105 | 200 | 62 |
| | Haze (%) | 9.5 | 7.0 | 23 | 33 |
| | Warpage | A | A | A | A |
| | Stickiness | A | A | B | B |
| | Total evaluation | A | A | B | B |
| | Comment | Totally very good | Totally very good | Totally good | Totally good |

Table 4 (continued)

| | | Comparative Example 5 | Comparative Example 6 |
|---|---|---|---|
| Component [I] | P1 (mass %) | - | - |
| | P2 (mass %) | 80 | - |
| | P3 (mass %) | - | 40 |
| Component [II] | B1 (mass %) | 20 | 60 |
| | B2 (mass %) | - | - |
| | B3 (mass %) | - | - |
| Tensile elastic modulus (MPa) | | 420 | 120 |
| Evaluation results | Haze (%) | 60 | 61 |
| | Warpage | B | A |
| | Stickiness | A | D |
| | Total evaluation | D | D |
| Comment | | Unsatisfactory in flexibility and transparency | Unsatisfactory in transparency and stickiness |

INDUSTRIAL APPLICABILITY

The tubular molded article of the present invention does not contain chlorine and therefore is not likely to generate poisonous gases such as hydrogen chloride gas and dioxin in wasting and incinerating. Further, it does not use a plasticizer and therefore does not cause troubles by elution of the plasticizer in use, so that it is safe and soft to the earth environment. In addition, it has a good feel (soft and no sticky feeling) required to flexible hoses and tubes as tubular molded articles and is excellent in mechanical strength and transparency, and it is not sticky and is excellent as well in molding-ability, so that expansion in the use fields thereof can be expected.

## Claims

**1.** A tubular molded article formed from a resin composition comprising

[I] a propylene polymer in an amount of 1 to 99 moss %, and [II] an olefin-based polymer in an amount of 99 to 1 mass %,

wherein [I] the propylene polymer satisfies the following requirement of:

(1) the meso pentad fraction (mmmm) is 0.2 to 0.6,
(2) the racemic pentad fraction (rrrr) and (1 - mmmm) satisfy the following relation: [rrrr/(1 - mmmm)] ≤ 0.1 and
(3) the melting endotherm amount ΔH (J/g) determined by differential scanning calorimeter (DSC) satisfies the following relation:

$$30 \geq \Delta H \geq 24.$$

**2.** The tubular molded article as described in claim 1, wherein [I] the propylene polymer is a propylene polymer satisfying the following requirement of:

(4) the intrinsic viscosity [η] measured at 135°C in tetralin is 1.0 to 3.0 deciliter/g.

**3.** The tubular molded article as described in claim 1 or 2, wherein [I] the propylene polymer is a propylene polymer satisfying the following requirement of:

(5) the amount of a component eluted at 25°C or lower in temperature rise chromatography (W25) is 20 to 100 mass %.

**4.** The tubular molded article as described in any one of claims 1 to 3, wherein [I] the propylene polymer is polymerized using a metallocene catalyst comprising a transition metal compound having a cross-linking structure formed via two cross-linking groups and a promoter.

**5.** The tubular molded article as described in any one of cloims 1 to 4, wherein [II] the olefin-based polymer is a propylene base polymer.

**6.** A multilayer tubular molded article having at least one layer comprising the resin composition as described in claim 1.

**7.** A molded article obtained by subjecting the resin for contour extrusion molding comprising the resin composition as described in any one of claims 1 to 4 to contour extrusion molding.

**8.** Use of a resin comprising the resin composition as described in any one of claims 1 to 4 for contour extrusion molding.

**Patentansprüche**

**1.** Rohrförmiges Formprodukt, das aus einer Harzzusammensetzung geformt ist, die (I) ein Propylenpolymer in einer Menge von 1 bis 99 Masseprozent und (II) ein Polymer auf Olefinbasis in einer Menge von 99 bis 1 Masseprozent umfasst, wobei (I) das Propylenpolymer die folgenden Anforderungen erfüllt:

(1) die Meso-Pentadfraktion (mmmm) beträgt 0,2 bis 0,6;
(2) die racemische Pentadfraktion (rrrr) und (1 - mmmm) erfüllt die folgende Beziehung: [rrrr/(1 - mmmm)] ≤ 0,1; und
(3) die endotherme Schmelzmenge ΔH (J/g), welche mit einem Differentialkalorimeter (DSK) bestimmt wird, erfüllt die folgende Beziehung:

$$30 \geq \Delta H \geq 24.$$

**2.** Rohrförmiges Formprodukt nach Anspruch 1, wobei (I) das Propylenpolymer ein Propylenpolymer ist, welches die folgende Anforderung erfüllt:

(4) die Grenzviskosität [η], die bei 135° C in Tetralin gemessen wird, beträgt 1,0 bis 3,0 Deziliter/g.

3. Rohrförmiges Formprodukt nach Anspruch 1 oder 2, wobei (I) das Propylenpolymer ein Propylenpolymer ist, welches die folgende Anforderung erfüllt:

   (5) die Menge einer Komponente, die bei 25° C oder niedriger mit der Temperaturerhöhungschromatographie (W25) eluiert wird, beträgt 20 bis 100 Masseprozent.

4. Rohrförmiges Formprodukt nach einem der Ansprüche 1 bis 3, wobei (I) das Propylenpolymer unter Verwendung eines Metallocenkatalysators polymerisiert ist, der eine Übergangsmetallverbindung umfasst, die eine vernetzte Struktur hat, welche über zwei Vernetzungsgruppen und einen Promotor gebildet ist.

5. Rohrförmiges Formprodukt nach einem der Ansprüche 1 bis 4, wobei (II) das Polymer auf Olefinbasis ein Polymer auf Propylenbasis ist.

6. Mehrschichtiges, rohrförmiges Formprodukt mit wenigstens einer Schicht, welche die Harzzusammensetzung nach Anspruch 1 umfasst.

7. Formprodukt, das durch Unterwerfen eines Harzes für die Konturextrusion, welches die Harzzusammensetzung nach einem der Ansprüche 1 bis 4 umfasst, unter eine Konturextrusion erzielt wird.

8. Verwendung eines Harzes, das die Harzzusammensetzung nach einem der Ansprüche 1 bis 4 umfasst, für die Konturextrusion.

## Revendications

1. Article tubulaire moulé formé d'une composition de résine comprenant (I) un polymère polypropylène dans une quantité allant de 1% à 99% en masse et (II) un polymère à base d'oléfine dans une quantité allant de 99% à 1% en masse,
   dans lequel le polymère propylène (I) satisfait aux exigences suivantes :

   (1) la fraction pentade méso (mmmm) va de 0,2 à 0,6,
   (2) la fraction pentade racémique (rrrr) et (1 - mmmm) satisfait la relation suivante :

$$[rrrr/(1 - mmmm)] \leq 0,1$$

   et
   (3) la valeur de l'endotherme de fusion ΔH (J/g) déterminée par un calorimètre différentiel à balayage (DSC) satisfait la relation suivante : $30 \geq \Delta H \geq 24$.

2. Article tubulaire moulé selon la revendication 1, dans lequel le polymère propylène (I) est un polymère propylène satisfaisant à l'exigence suivante :

   (4) la viscosité intrinsèque (η) mesurée à 135°C dans de la tétraline va de 1,0 à 3,0 décilitres/g.

3. Article tubulaire moulé selon la revendication 1 ou 2, dans lequel le polymère propylène (I) est un polymère propylène satisfaisant l'exigence suivante :

   (5) la quantité d'un composant élué à une température inférieure ou égale à 25°C lors d'une chromatographie à température croissante (W25) va de 20% à 100% en masse.

4. Article tubulaire moulé selon l'une quelconque des revendications 1 à 3, dans lequel le polymère propylène (I) est polymérisé à l'aide d'un catalyseur métallocène comprenant un composé de métal de transition ayant une structure réticulée formée de deux groupes de réticulation et d'un promoteur.

5. Article tubulaire moulé selon l'une quelconque des revendications 1 à 4, dans lequel le polymère à base d'oléfine

(II) est un polymère à base de propylène.

**6.** Article tubulaire moulé multicouche comportant au moins une couche comprenant la composition de résine telle que décrite dans la revendication 1.

**7.** Article moulé obtenu en soumettant la résine, destinée à un moulage par extrusion de contour comprenant la composition de résine selon l'une quelconque des revendications 1 à 4, à un moulage par extrusion de contour.

**8.** Utilisation d'une résine comprenant la composition de résine selon l'une quelconque des revendications 1 à 4 pour un moulage par extrusion de contour.

Fig. 1

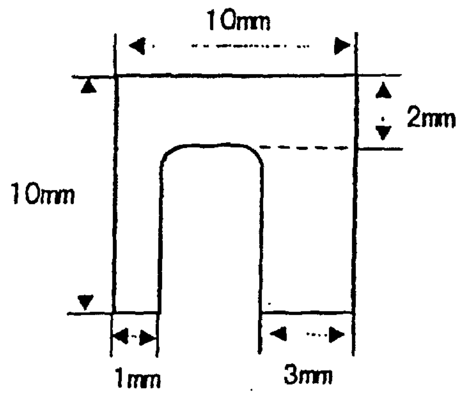


Fig. 2